# EUROPÄISCHE PATENTSCHRIFT

(11) **EP 0 667 514 B1**
(45) Veröffentlichungstag und Bekanntmachung des Hinweises auf die Patenterteilung: **24.07.2002**
(21) Anmeldenummer: 95100152.8
(22) Anmeldetag: 07.01.1995
(51) Int. Cl.: G01L 1/22

(54) **Dehnungsmessstreifen und Verfahren zu seiner Herstellung**
Strain-gauge and method for its manufacturing
Jauge de contrainte et méthode de sa fabrication

(30) Priorität: 15.02.1994 DE 4404716
(43) Veröffentlichungstag der Anmeldung: 16.08.1995
(73) Patentinhaber: Hottinger Baldwin Messtechnik GmbH, 64293 Darmstadt (DE)
(72) Erfinder: Hauber, Martin, D-64367 Nieder-Beerbach (DE); Burfeindt, Helmut, D-64380 Rossdorf (DE)
(74) Vertreter: Behrens, Helmut, Dipl.-Ing.

(56) Entgegenhaltungen:
- EP-A- 0 107 966
- US-A- 3 626 256
- US-A- 4 050 976
- PATENT ABSTRACTS OF JAPAN vol. 9, no. 109 (P-355) [1832] , 14.Mai 1985 & JP-A-59 231430 (TOKYO DENKI KK), 26.Dezember 1984,
- WAGEN + DOSIEREN, Bd. 24, Nr. 3, Mai 1993, MAINZ, DE, Seiten 38-39, XP002005975 "Selbstklebende Dehnungsmessstreifen"
- MESURES, Bd. 19, Nr. 609, Juni 1989, PARIS, FR, Seiten 69-72, XP002005976 "Extensometrie haute temperature - choisissez d'abord, compensez apres"

## Beschreibung

Die Erfindung bezieht sich auf einen Dehnungsmeßstreifen mit einem auf einer Trägerfolie angeordneten Meßgitter und mit einer auf dem Meßgitter angeordneten, eine erste Schicht eines isolierenden Materials und eine zweite Schicht eines metallischen Materials aufweisenden Abdeckung sowie auf ein Verfahren zur Herstellung eines derartigen Dehnungsmeßstreifens sowie auf Meßgrößenaufnehmer mit derartigen Dehnungsmeßstreifen.

Herkömmliche Dehnungsmeßstreifen werden im allgemeinen, nachdem sie auf einem Bauteil oder einem Meßgrößenaufnehmer appliziert worden sind, mit einer gegen Feuchteeinwirkung schützenden Schicht überzogen oder werden vollständig durch z. B. Faltenbalganordnungen gekapselt, um unerwünschte Auswirkungen auf das Meßsignal zu vermeiden.

Ein Dehnungsmeßstreifen der eingangs genannten Art ist aus der DE-OS 27 28 916 bekannt. Der auf einem Meßgrößenaufnehmer angebrachte Dehnungsmeßstreifen wird mit einer elektrisch isolierenden Schicht z. B. eines Harzes derart überzogen, daß auch ein Teil des Aufnehmerkörpers rund um den Dehnungsmeßstreifen abgedeckt wird. Auf diese isolierende Schicht wird dann eine Metallschicht aufgebracht, die ebenfalls den Teil des Aufnehmers rund um den Dehnungsmeßstreifen abdeckt. Die elektrischen Anschlüsse des Dehnungsmeßstreifens werden unter dieser Abdekkung durch das Innere des Aufnehmers abgedichtet nach außen geführt. Die feuchtigkeitsdichte hermetische Kapselung ist so an keiner Stelle unterbrochen. Diese Art der Abdeckung ist jedoch nur für einen bereits auf dem Aufnehmer applizierten Dehnungsmeßstreifen geeignet.

Aus der JP-A-59-231430 ist ein Biegebalkenaufnehmer mit Dehnungsmeßstreifen bekannt. Dabei sind die Dehnungsmeßstreifen mit einer Schutzschicht aus einem Harz abgedeckt, auf die eine zusätzliche Metallschicht aufgedampft oder aufgesputtert wurde. Ein derartiges Aufbringen der Metallschicht nach der sogenannten Dünnfilmtechnik eignet sich ebenfalls nur für Aufnehmer, auf denen bereits Dehnungsmeßstreifen appliziert sind.

Aus der EP-OS 0 107 966 ist ein Dehnungsmeßstreifen bekannt, der mit einer folienförmigen Abdeckung aus einer Isolierschicht und einer Aluminiumschicht versehen ist, die ebenfalls den Teil des Aufnehmers rund um den Dehnungsmeßstreifen abdeckt. Zur hermetischen Kapselung ist an den Umfangskanten der folienförmigen Abdeckung eine Aluminiumablagerung vorgesehen, um das Eindringen von Feuchtigkeit längs der Umfangskanten sicher zu verhindern. Auch diese. Art der Abdeckung ist nur für Dehnungsmeßstreifen anwendbar, die bereits auf einem Aufnehmerkörper appliziert sind.

Die EP-OS 0 460 249 zeigt einen Dehnungsmeßstreifen, der einen das Gitter mit seinen Anschlüssen umgebenden metallischen Rahmen aufweist. Der Raum innerhalb des Rahmens ist mit einer isolierenden Masse ausgefüllt und eine am Rahmen befestigte Metallfolie deckt den Raum innerhalb des Rahmens ab. Diese Kapselung ist wegen der erforderlichen Arbeitsschritte aufwendig und damit kostenintensiv.

Der Erfindung liegt die Aufgabe zugrunde, einen gegen Feuchteeinwirkung unempfindlichen Dehnungsmeßstreifen zu schaffen, der einfach und kostengünstig herzustellen ist und der keine Nachbehandlungen im applizierten Zustand erfordert.

Erfindungsgemäß wird diese Aufgabe durch die Merkmale des Patentanspruchs 1 und die Verfahrensschritte nach Patentanspruch 10 gelöst.

Aus der US-PS 3,274,528 ist ein Dehnungsmeßstreifen bekannt, bei dem das Meßgitter vollständig in einer Matrix aus einem polymerisierbaren Grundstoff eingebettet ist. Es wird in einem fortlaufenden Prozeß ein Band mit einer Vielzahl von aneinandergereihten Dehnungsmeßstreifen hergestellt. Die Dehnungsmeßstreifen werden vor der Applikation vereinzelt. Die applizierten Dehnungsmeßstreifen werden nicht weiter abgedeckt. Dieser Dehnungsmeßstreifen ist allein durch die Einbettung in die Kunststoffmatrix gegen Feuchteeinwirkung in gewissem Umfang geschützt; eine zusätzliche metallische Schicht ist hier nicht vorgesehen, so daß Feuchteeinwirkungen das Meßergebnis beeinflussen können.

Bei dem erfindungsgemäß ausgebildeten Dehnungsmeßstreifen ist dagegen eine Metallfolie als zusätzliche Abdeckung auf der Isolierschicht vorgesehen, die vor der Vereinzelung der Dehnungsmeßstreifen aufgebracht wird. Der einzelne Dehnungsmeßstreifen ist auch nach dem Vereinzelungsvorgang großflächig durch die Metallfolie gegen Feuchteeinwirkungen geschützt. Obwohl entgegen der üblichen Technik eine hermetische Kapselung durch die Metallfolie z. B. aufgrund des Trennvorganges nicht vorgesehen ist, wird mit der Erfindung überraschenderweise erreicht, daß die Dehnungsmeßstreifen eine verringerte Temperaturabhängigkeit des Kriechens aufweisen, wobei darüber hinaus diese Temperaturabhängigkeit noch linearisiert ist. Es ergibt sich ferner eine erhebliche Verbesserung der Linearität des Temperaturkoeffizienten des Nullpunkts. Eine entscheidende Verbesserung ergibt sich auch in der Temperaturabhängigkeit der Nullpunktrückkehr und der relativen Umkehrspanne. Die temperaturabhängige Streuung der relativen Umkehrspanne läßt sich mit der Erfindung um den Faktor 5 verkleinern, die temperaturabhängige Streuung der Nullpunktrückkehr ist nur noch halb so groß. Die relative Umkehrspanne kann darüber hinaus zwecks Verbesserung der Aufnehmerdaten mit den Mitteln der Erfindung auf einfache Art verschoben werden; durch den gewählten Aufbau des Dehnungsmeßstreifens ist beispielsweise eine positivere oder negativere relative Umkehrspanne erzielbar, d. h. daß die relative Umkehrspanne oberhalb oder unterhalb der Kurve des Belastungsaufbaus liegt. Die Änderung des Meßsignals bei Feuchteänderung der umgebenden Atmosphäre spielt praktisch keine Rolle mehr, so daß auch eine Verbesserung der Langzeitstabilität der Meßeigenschaften, die überdies sehr kleine Streuungen aufweisen, erzielt wird. Zur Verbesserung der Meßeigenschaften trägt auch bei, daß die Dehnungsmeßstreifen aufgrund der Verwendung von Folien sehr geringe Dickenabweichungen aufweisen. Durch die Abdeckung mit der Metallfolie ist die Bruchgefahr bei der Herstellung und Handhabung der Dehnungsmeßstreifen gravierend verringert, weil die Verbundfolie aus Trägerfolie und metallischer Abdeckfolie eine bedeutend verbesserte Stabilität aufweist, was insbesondere beim Vereinzeln der Dehnungsmeßstreifen aus der Herstellungseinheit mit einer Vielzahl von Dehnungsmeßstreifen ein Brechen, Abbrechen oder Splittern des ganzen Dehnungsmeßstreifens bzw. der Kanten verhindert. Die mechanische Stabilität ermöglicht neben einer problemlosen Handhabung auch einen automatisierten Herstellungsprozeß.

Eine besonders einfache Herstellungsmöglichkeit ergibt sich, wenn die die zweite Schicht bildende Folie und die Trägerfolie zwei gemeinsame Trennkanten aufweisen. Hier kann z. B. in einem fortlaufenden Prozeß ein Band aus Trägerfolie und darauf befindlichen Dehnungsmeßstreifen hergestellt werden, aus dem nach der Abdeckung die einzelnen Dehnungsmeßstreifen durch z. B. Abschneiden vereinzelt werden. Es kann auch die Herstellung im Nutzen, d. h. auf einem Blatt Trägerfolie, auf dem eine Vielzahl von Dehnungsmeßstreifen in Reihen und Spalten angeordnet ist, erfolgen. Bei der Vereinzelung haben dann Trägerfolie und Abdeckung mehrere gemeinsame Trennkanten.

Vorteilhaft ist eine Ausgestaltung, bei der zwischen erster und zweiter Schicht der Abdeckung eine Zwischenschicht vorzugsweise eines Klebstoffmaterials angeordnet ist. Durch chemisches, elektrochemisches oder mechanisches Aufrauhen kann dabei die Haftung der Metallfolie weiter verbessert werden.

Auf der metallischen Abdeckfolie können in vorteilhafter Weise Hinweise z. B. auf den Hersteller oder Beschaltungshinweise oder Positioniermarken durch beispielsweise Laserbeschriftung, Anätzen der Folie, Bedrucken der Folie oder auf sonstige Weise angebracht sein. Die Mittenmarkierung des Meßgitters durch Marken, die außerhalb der Abdeckung angebracht werden können und die um einen festgelegten Betrag gegen die Mitte des Meßgitters versetzt sind, kann durch Marken auf der metallischen Abdeckfolie ersetzt werden.

Bei der Ausgestaltung nach den Merkmalen des Patentanspruchs 5 ist eine weitere Schutzschicht vorgesehen, die mechanische Beschädigungen verhindern soll.

Mit den Merkmalen des Patentanspruchs 8 wird eine Ausgestaltung unter Schutz gestellt, bei der alle Schichten der Dehnungsmeßstreifen durch Folien gebildet sind, was den Herstellungsprozeß wesentlich vereinfacht.

Weitere vorteilhafte Ausgestaltungen sind Gegenstände der Unteransprüche.

Durch Art und Auslegung der Abdeckung läßt sich das Meßverhalten eines Dehnungsmeßstreifens gezielt beeinflussen. Bei einem Meßgrößenaufnehmer mit einer Anordnung umfassend mehrere erfindungsgemäße Dehnungsmeßstreifen, wobei die Anordnung bis auf die Anschlußbereiche vollständig mit der Abdeckung versehene Dehnungsmeßstreifen und/oder in zumindest einem Teilbereich mit der Abdeckung versehene Dehnungsmeßstreifen umfaßt, läßt sich auf besonders einfache Weise insbesondere durch Kombination von bezüglich der Abdeckung verschiedenartiger erfindungsgemäßer Dehnungsmeßstreifen das Meßverhalten gezielt beeinflussen; dies gilt aber auch für Meßgrößenaufnehmer, bei denen nur vollständig oder nur teilweise abgedeckte Dehnungsmeßstreifen Verwendung finden.

Die Erfindung wird im folgenden anhand der Zeichnung näher erläutert.
- Fig. 1:: zeigt einen Dehnungsmeßstreifen nach der Erfindung in perspektivischer Darstellung
- Fig. 2:: zeigt ein Diagramm über die Feuchteempfindlichkeit des erfindungsgemäßen Dehnungsmeßstreifens.

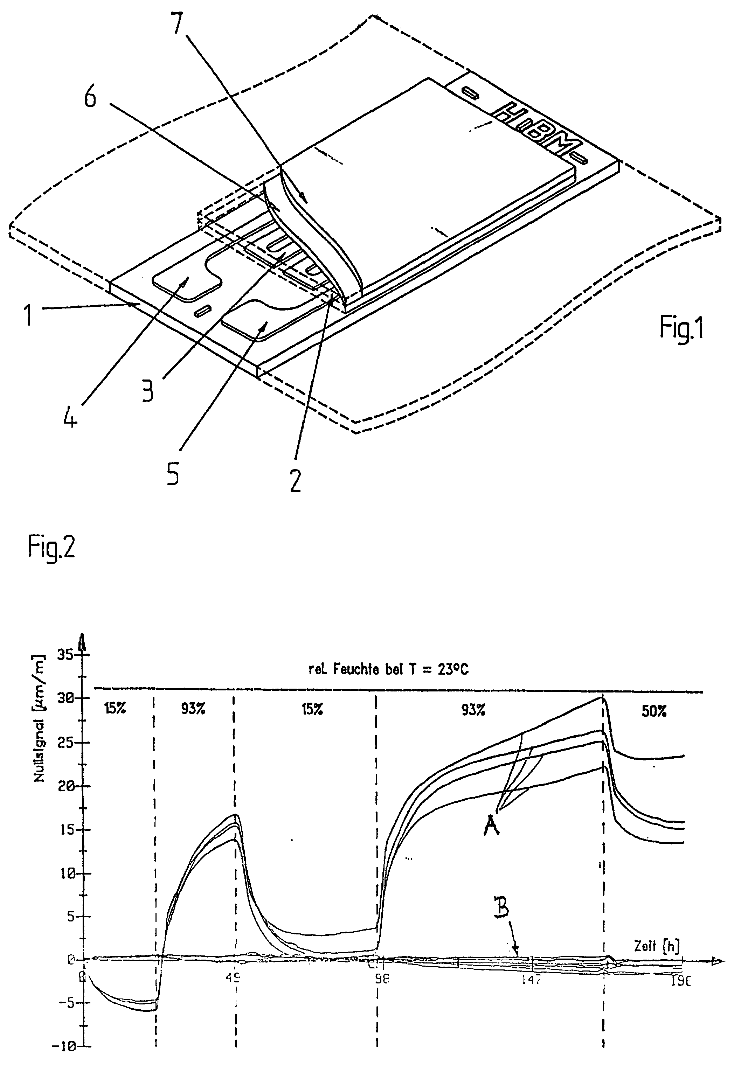

Mit 1 ist in Fig. 1 die Trägerfolie für den Dehnungsmeßstreifen gekennzeichnet, die im Beispiel eine Folie aus Polyimid ist. Es kann jedoch jede geeignete andere Folie Verwendung finden, wie z. B. Polyamid-, Polyphenylensulfid- oder Polyetherketon-Folie. Die Trägerfolie 1 kann auch ein mit Phenolharz getränktes Glasfaservlies oder eine gegossene Kunststoffolie (z. B. Polyamidimid) sein.

Auf dieser Trägerfolie 1 ist das Meßgitter 2 mit einem mäanderförmig angeordneten Streifen 3, z. B. aus einer dünnen metallischen Schicht aus Konstantan oder aus einer dünnen Schicht elektrisch halbleitenden Materials angebracht. Die Enden des mäanderförmig angeordneten Streifens sind über Anschlußbereiche 4, 5 mit einer Auswerteschaltung in Form z. B. einer Wheatstone'schen Brückenschaltung verbunden.

Das Meßgitter 2 wird aus der Metallschicht beispielsweise durch Ätzen geformt, wobei die Metallschicht und die Trägerfolie 1 durch eine Klebeschicht, die z. B. als Klebefolie ausgebildet sein kann, fest verbunden sind.

Auf dem Meßgitter 2 ist eine Abdeckung angebracht, die eine erste Schicht 6 eines isolierenden Materials und eine zweite Schicht in Form einer diffusionshemmenden metallischen Folie 7, beispielsweise eine CrNi-Folie, eine CuNi-Folie, eine Au-Folie oder eine Al-Folie aufweist. Es sind alle Metalle bzw. Metallegierungen geeignet, die in Folienform eine glatte porenfreie Schicht bilden und insbesondere die, die sehr korrosionsbeständig sind. Die Metallfolie 7 hat eine Dicke von 5 µm, wobei auch Dicken von 1 µm bis 20 µm gewählt werden können.

Die Abdeckung kann wahlweise nur den Meßgitterbereich abdecken und die Anschlußbereiche 4, 5 freilassen (in Fig. 1 strichpunktiert angedeutet) oder z. B. bei Dehnungsmeßstreifen mit vor der Abdeckung angebrachten Anschlußdrähten die Trägerfolie 1 komplett abdecken.

Bei einem vorteilhaften Herstellungsverfahren werden vor der Abdeckung vom Nutzen Streifen von Dehnungsmeßstreifen bzw. Dehnungsmeßstreifenanordnungen abgetrennt und die Streifen mit der Abdeckung versehen, bevor die Dehnungsmeßstreifen bzw. Dehnungsmeßstreifenanordnungen schließlich vereinzelt werden.

Statt einer Herstellung im Nutzen kann auch die Herstellung in Bandform erfolgen. Dabei werden auf einer bandförmigen Trägerfolie (in Fig. 1 strichpunktiert angedeutet) zunächst eine Vielzahl von in Bandrichtung nebeneinander angeordneten Dehnungsmeßstreifen in bekannter Weise ausgeformt. Anschließend wird eine Isolierschicht 6 vorzugsweise in Form einer Folie, die beiderseits mit einem Klebstoff versehen ist, oder eine isolierende Klebstoffolie auf die Folienbahn mit den Meßgittern so aufgebracht, daß die Anschlußbereiche 4, 5 jedes Meßgitters frei bleiben. Es können jedoch auch separate Klebefolien zwischen Trägerfolie 1 mit Meßgitter 2 und Isolierschicht 6 sowie zwischen Isolierschicht 6 und Metallfolie 7 angeordnet werden.

Auf die isolierende Folie wird anschließend eine Metallfolie 7 aufgebracht und das Ganze schließlich unter Druck und Temperatur fest miteinander verbunden.

Aus diesem Band werden die einzelnen Dehnungsmeßstreifen bzw. einzelne Dehnungsmeßstreifenanordnungen schließlich durch Schneiden vereinzelt.

Die Abdeckung kann vorteilhaft mit Ausrichtmarkierungen, z. B. durch vor der Vereinzelung aufgedruckte Linien versehen sein.

Ferner kann vorgesehen werden, daß vor der Vereinzelung eine bei Applikation des Dehnungsmeßstreifens auf einem Aufnehmerkörper oder auf einem Bauteil aktivierbare Klebstoffschicht auf der der Abdeckung abgewandten Seite der Trägerfolie aufgebracht wird.

Fig. 2 zeigt die Nullsignalstabilität von erfindsgemäßen Dehnungsmeßstreifen bei wechselnder relativer Feuchte. Die relative Feuchte betrug bei der Ermittlung der Meßwerte während einer bestimmten Zeitdauer 15%, 93%, wieder 15%, wieder 93% und schließlich 50%, die entsprechenden Versuchszeiträume sind durch die unterbrochenen Linien in der Fig. 2 definiert. Die Kurvenschar A zeigt dabei die Nullsignaländerungen einer Gruppe Dehnungsmeßstreifen aus einer Herstellungscharge, die ein mit Phenolharz getränktes Glasfaservlies als Träger und als Abdekkung aufweisen. Die Kurvenschar B hingegen zeigt die Nullsignaländerungen einer Gruppe von erfindungsgemäßen Dehnungsmeßstreifen aus einer Herstellungscharge, d.h. Dehnungsmeßstreifen, die ein mit Phenolharz getränktes Glasfaservlies als Träger und eine Abdeckung mit einem mit Phenolharz getränkten Glasfaservlies und einer zusätzlichen Metallfolie aufweisen. Die Form des Meßgitters und die Abmessungen sind ansonsten gleich. Die Fig. 2 zeigt deutlich die gravierenden Verbesserungen, die sich mit der Erfindung ergeben.

## Patentansprüche

1. Dehnungsmeßstreifen, insbesondere Dehnungsmeßstreifen für Meßgrößenaufnehmer, mit einem auf einer Trägerfolie (1) angeordneten Meßgitter (2), mit einer auf dem Meßgitter (2) angeordneten, eine erste Schicht (6) eines isolierenden Materials und eine zweite Schicht eines metallischen Materials aufweisenden Abdeckung, **dadurch gekennzeichnet, daß** zumindest die zweite Schicht der Abdeckung als Folie (7) ausgebildet ist, deren Erstreckung in der Abdeckebene kleiner oder gleich der Erstreckung der Trägerfolie (1) ist.

2. Dehnungsmeßstreifen nach Anspruch 1, **dadurch gekennzeichnet, daß** die die zweite Schicht bildende Folie (7) und die Trägerfolie (1) zwei gemeinsame Trennkanten aufweisen.

3. Dehnungsmeßstreifen nach Anspruch 1 oder Anspruch 2, **dadurch gekennzeichnet, daß** zwischen erster und zweiter Schicht der Abdeckung eine Zwischenschicht vorzugsweise eines Klebstoffmaterials angeordnet ist.

4. Dehnungsmeßstreifen nach einem oder mehreren der vorhergehenden Ansprüche, **dadurch gekennzeichnet, daß** auf der oder durch die zweite Schicht der Abdeckung Ausrichtmarkierungen gebildet sind.

5. Dehnungsmeßstreifen nach einem oder mehreren der vorhergehenden Ansprüche, **dadurch gekennzeichnet, daß** auf der zweiten Schicht der Abdeckung eine Schutzschicht gegen vorzugsweise mechanische Einwirkungen angeordnet ist.

6. Dehnungsmeßstreifen nach einem oder mehreren der vorhergehenden Ansprüche, **dadurch gekennzeichnet, daß** zwischen erster Schicht der Abdeckung und Trägerfolie mit Meßgitter eine Klebstoffschicht angeordnet ist.

7. Dehnungsmeßstreifen nach einem oder mehreren der vorhergehenden Ansprüche, **dadurch gekennzeichnet, daß** zumindest die erste und zweite Schicht der Abdeckung eine Verbundfolie bilden.

8. Dehnungsmeßstreifen nach Anspruch 7, **dadurch gekennzeichnet, daß** die Trägerfolie mit ausgeformtem Meßgitter und die erste und zweite Schicht der Abdeckung ein Verbundfolienteil bilden.

9. Dehnungsmeßstreifen nach Anspruch 8, **dadurch gekennzeichnet, daß** das Verbundfolienteil mit einer aktivierbaren Klebstoffschicht zur Applikation auf einem Aufnehmerkörper versehen ist.

10. Verfahren zur Herstellung eines Dehnungsmeßstreifens nach einem der Ansprüche 1 bis 9, **dadurch gekennzeichnet, daß** auf einer Trägerfolie eine Vielzahl von Meßgittern ausgeformt wird, auf die eine erste Schicht eines isolierenden Materials auf Meßgitter und Bereiche der Trägerfolie aufgebracht wird, darauf eine zweite metallische Schicht in Folienform aufgebracht wird und daraus durch Trennvorgänge vorzugsweise einzelne Dehnungsmeßstreifen hergestellt werden.

11. Verfahren nach Anspruch 10, **dadurch gekennzeichnet, daß** zwischen Trägerfolie mit Meßgitter und der ersten Schicht eine Zwischenschicht vorzugsweise eines Klebstoffmaterials und/oder zwischen der ersten Schicht und der zweiten Schicht eine Zwischenschicht vorzugsweise eines Klebstoffmaterials eingebracht wird.

12. Verfahren nach Anspruch 11, **dadurch gekennzeichnet, daß** auch die erste Schicht und die jeweilige Zwischenschicht in Folienform eingebracht werden.

13. Meßgrößenaufnehmer mit einer Anordnung umfassend mehrere Dehnungsmeßstreifen nach einem oder mehreren der Patentansprüche 1 bis 9, **dadurch gekennzeichnet, daß** die Anordnung bis auf die Anschlußbereiche vollständig mit der Abdeckung versehene Dehnungsmeßstreifen und/oder in zumindest einem Teilbereich mit der Abdeckung versehene Dehnungsmeßstreifen umfaßt.

## Claims

1. A resistance strain gauge, especially a resistance strain gauge for measuring sensors, incorporating a measuring grid (2) arranged on a support film (1) and also incorporating a covering which is arranged on the measuring grid (2) and comprises a first layer (6) of insulating material and a second layer of metallic material, **characterised in that** at least the second layer of the covering is in the form of a film (7) which extends in the plane of the covering to an equal or lesser extent than the support foil (1).

2. A resistance strain gauge in accordance with Claim 1, **characterised in that** the film (7) forming the second layer and the support foil (1) comprise two common parting edges.

3. A resistance strain gauge in accordance with Claim 1 or 2, **characterised in that** an intermediate layer, preferably of adhesive material, is arranged between the first and second layers of the covering.

4. A resistance strain gauge in accordance with one or more of the preceding Claims, **characterised in that** alignment markings are formed on or through the second layer of the covering.

5. A resistance strain gauge in accordance with one or more of the preceding Claims, **characterised in that** a protective layer; preferably for counteracting mechanical effects, is arranged on the second layer of the covering.

6. A resistance strain gauge in accordance with one or more of the preceding Claims, **characterised in that** an adhesive layer is arranged between the first layer of the covering and the support film carrying the measuring grid.

7. A resistance strain gauge in accordance with one or more of the preceding Claims, **characterised in that** at least the first and second layers of the covering form a compound film.

8. A resistance strain gauge in accordance with Claim 7, **characterised in that** the support film carrying the patterned measuring grid and the first and second layers of the covering form a compound film unit.

9. A resistance strain gauge in accordance with Claim 8, **characterised in that** the compound film unit is provided with an activatable adhesive layer for the purposes of applying it to a sensor body.

10. A method of manufacturing a resistance strain gauge in accordance with any of the Claims 1 to 9, **characterised in that** a plurality of measuring grids are formed on a support film, upon which a first layer of an insulating material is applied to the measuring grids and portions of the support film, whereupon a second metallic layer is applied in the form of a film and individual resistance strain gauges are preferably produced by severing processes.

11. A method in accordance with Claim 10, **characterised in that** an intermediate layer of preferably adhesive material is introduced between the support foil carrying the measuring grids and the first layer and/or an intermediate layer of preferably adhesive material is introduced between the first layer and the second layer.

12. A method in accordance with Claim 11, **characterised in that** the first layer and the respective intermediate layer are also introduced in the form of a film.

13. A measuring sensor having an arrangement comprising a plurality of resistance strain gauges in accordance with one or more of the Claims 1 to 9, **characterised in that** the arrangement encompasses resistance strain gauges that are provided with the covering entirely up to the terminal regions thereof and/or resistance strain gauges that are provided with the covering in at least a partial region thereof.

## Revendications

1. Bande de mesure d'allongement, en particulier bande de mesure d'allongement pour capteurs de grandeurs de mesure, comportant une grille de mesure (2) disposée sur une feuille de support (1), comportant une couverture qui est disposée sur la grille de mesure (2)et qui présente une première couche (6) d'une matière isolante et une deuxième couche d'une matière métallique, **caractérisée en ce qu'**au moins la deuxième couche de la couverture est réalisée sous la forme d'une feuille (7) dont l'étendue, dans le plan de couverture, est inférieure ou égale à l'étendue de la feuille de support (1).

2. Bande de mesure d'allongement selon la revendication 1, **caractérisée en ce que** la feuille (7) qui forme la deuxième couche et la feuille de support (1) présentent deux bords de séparation communs.

3. Bande de mesure d'allongement selon la revendication 1 ou la revendication 2, **caractérisée en ce qu'**il est disposé une couche intermédiaire, de préférence une matière adhésive, entre la première et la deuxième couche de la couverture.

4. Bande de mesure d'allongement selon une ou plusieurs des revendications précédentes, **caractérisée en ce que** des marquages d'orientation sont formés sur la deuxième couche de la couverture, ou par cette deuxième couche.

5. Bande de mesure d'allongement selon une ou plusieurs des revendications précédentes, **caractérisée en ce qu'**une couche de protection contre des effets de préférence mécaniques, est prévue sur la deuxième couche de la couverture.

6. Bande de mesure d'allongement selon une ou plusieurs des revendications précédentes, **caractérisée en ce qu'**une couche adhésive est prévue entre la première couche de la couverture et la feuille de support avec grille de mesure.

7. Bande de mesure d'allongement selon une ou plusieurs des revendications précédentes, **caractérisée en ce qu'**au moins la première et la deuxième couche de la couverture forment une feuille composite.

8. Bande de mesure d'allongement selon la revendication 7, **caractérisée en ce que** la feuille de support avec grille de mesure formée et la première et la deuxième couche de la couverture forment une partie de feuille composite.

9. Bande de mesure d'allongement selon la revendication 8, **caractérisée en ce que** la partie de feuille composite est pourvue d'une couche de matière adhésive activable pour l'application sur un corps de capteur.

10. Procédé de fabrication d'une bande de mesure d'allongement selon l'une des revendications 1 à 9, **caractérisé en ce que** sur une feuille de support est formé un grand nombre de grilles de mesure, une première couche d'une matière isolante est appliquée sur les grilles de mesure et des zones de la feuille de support, après quoi une deuxième couche métallique sous forme de feuille est appliquée et à partir de ceci des bandes de mesure d'allongement individuelles sont réalisées, de préférence par des opérations de séparation.

11. Procédé selon la revendication 10, **caractérisé en ce qu'**entre la feuille de support avec grille de mesure et la première couche, il est inséré une couche intermédiaire de préférence d'une matière adhésive et/ou entre la première couche et la deuxième couche il est inséré une couche intermédiaire, de préférence d'une matière adhésive.

12. Procédé selon la revendication 1, **caractérisé en ce que** la première couche aussi et la couche intermédiaire respective sont insérées sous forme de feuilles.

13. Capteur de grandeurs de mesure avec un dispositif comprenant plusieurs bandes de mesure d'allongement selon une ou plusieurs des revendications 1 à 9, **caractérisé en ce que** le dispositif comprend des bandes de mesure d'allongement pourvues entièrement de la couverture, à l'exception des zones de connexion, et/ou dans au moins une zone partielle des bandes de mesure d'allongement pourvues de la couverture.
